# EUROPÄISCHE PATENTSCHRIFT

(11) **EP 3 870 497 B1**
(45) Veröffentlichungstag und Bekanntmachung des Hinweises auf die Patenterteilung: **31.08.2022**
(21) Anmeldenummer: 19770054.5
(22) Anmeldetag: 17.09.2019
(51) Int. Cl.: B62D 21/02, B62D 21/12, B62D 21/16

(54) **STRUKTURBAUTEIL FÜR EINEN FAHRGESTELLRAHMEN EINES FAHRZEUGES UND VERFAHREN ZUR HERSTELLUNG EINES STRUKTURBAUTEILS**
STRUCTURAL COMPONENT FOR A CHASSIS FRAME OF A VEHICLE AND METHOD FOR PRODUCING A STRUCTURAL COMOPONENT
ÉLÉMENT DE STRUCTURE D'UN CADRE DE CHÂSSIS D'UN VÉHICULE ET PROCÉDÉ DE FABRICATION D'UN ÉLÉMENT DE STRUCTURE

(30) Priorität: 23.10.2018 DE 102018218085
(43) Veröffentlichungstag der Anmeldung: 01.09.2021
(73) Patentinhaber: VOLKSWAGEN AKTIENGESELLSCHAFT, 38440 Wolfsburg (DE)
(72) Erfinder: OSTERWALD, Evelyn, 38173 Veltheim (DE); OSTERWALD, Christoph, 38173 Veltheim (Ohe) (DE); GLAUBITZ, Florian, 38176 Wendeburg (DE); KABALA, Philipp, 38110 Braunschweig (DE); WALCZAK, Christopher, 31275 Lehrte (Sievershausen) (DE); ROSENMEYER, Vicky, 38124 Braunschweig (DE); SCHIWIORA, Nils, 38106 Braunschweig (DE)
(86) Internationale Anmeldenummer: PCT/EP2019/074825
(87) Internationale Veröffentlichungsnummer: WO 2020/083570

(56) Entgegenhaltungen:
- EP-A1- 3 378 739
- DE-A1-102015 015 280
- US-A1- 2007 102 913
- US-A1- 2010 327 573

## Beschreibung

Die Erfindung betrifft ein Strukturbauteil für einen Fahrgestellrahmen eines Fahrzeuges mit den Merkmalen gemäß dem Oberbegriff von Anspruch 1. Die Erfindung betrifft ferner ein Verfahren zur Herstellung eines Strukturbauteils nach Anspruch 7.

Eine solches Strukturbauteil für einen Fahrzeugstellrahmen eines Fahrzeuges ist aus der EP 3 378 739 A1 bekannt.

Ein Fahrgestellrahmen eines Fahrzeuges, insbesondere eines Lastfahrzeuges, umfasst typischerweise zwei mit mehreren Querträgern verbundene Längsträger, die in konventioneller Bauweise aus Stahlbauteilen, insbesondere aus Stahlprofilen, gefertigt sind. Die zuvor genannten Querträger werden hoch belastet und haben mit ihrer Steifigkeit maßgeblichen Einfluss auf das Fahrverhalten und den Komfort der Fahrzeuge. Um das Gewicht und in weiterer Folge den Treibstoffverbrauch und CO₂-Ausstoß zu verringern, ist aus dem ONLINE-Kunststoff-Magazin eine Veröffentlichung vom 03.11.2015 mit dem Titel "Hochleistungswerkstoff im Auto - Funktionsintegration Querträger ist auch Hochdrucktank" bekannt, die einen Querträger in Composite-Metall-Hybridbauweise beschreibt, in dem ein Hochdrucktank integriert ist.

Aus der Druckschrift DE 20 2013 004 660 U1 ist ein Fahrzeuganhänger mit einem Rahmengestell beschrieben, das wenigstens ein hohles Rahmengestellteil umfasst, dessen Innenhohlraum als Druckluftspeicher druckdicht ausgebildet ist.

Aus der Druckschrift DE 20 2012 102 721 U1 ist zudem ein Druckluftbehälter zum Einsatz in Fahrzeugen, insbesondere in Nutzfahrzeugen, bekannt, der als Hohlprofil ausgebildet ist und ein Strukturbauteil des Fahrzeuges bildet oder das Strukturbauteil zumindest teilweise ersetzt. Ein Fertigungsverfahren zur Herstellung eines Druckgastankes geht aus der Druckschrift DE 10 2011 116 656 B3 hervor, wobei der Druckgastank einen Befüll- und Entnahmestutzen aufweist und eine Wandung des Druckgastanks aus einer Kohlefaserverbundwerkstoffschicht besteht und frei von einer innenwandigen Linerschicht ist. In dem Inneren des Druckgastanks ist eine Stützstruktur aus Streben oder Speichen aus Kohlefasermaterial angeordnet, wobei die distalen Streben- oder Speichen-Enden in einer polymeren Matrix in der die Wandung des Druckgastanks bildenden Kohlefaserverbundwerkstoffschicht aufgenommen sind.

Die Druckschrift DE 10 2016 110 803 A1 offenbart einen Druckbehälter, der einen rohrförmigen, rotationssymmetrischen Druckbehälterkörper aus einem Faserthermoplastverbundmaterial aufweist. In dem Druckbehälterkörper sind in Umfangsrichtung verlaufende sowie in axialer Richtung längs einer Rotationsachse beziehungsweise einer Längsachse des Behälterkörpers ausgerichtete, quasi endlose Fasern eingebettet. An einer Stirnseite des Behälterkörpers ist eine Öffnung angeordnet, die von einer mehrteilig ausgebildeten Verschlusseinrichtung druckfest verschlossen ist. Die Verschlusseinrichtung weist einen Wandinnenkonus auf, der ebenfalls aus einem Faserthermoplastverbundmaterial hergestellt ist. Ein Behälterboden ist ebenfalls aus einem Faserthermoplastverbundmaterial hergestellt und an einer Andruckfläche des Wandinnenkonus festgelegt. In der Druckschrift wird vorgeschlagen, dass der Wandinnenkonus aus einem kompatiblen oder sogar gleichen Faserkunststoffverbundmaterial, insbesondere einem Faserthermoplastverbundmaterial hergestellt und anschließend mit dem Behälterkörper verschweißt wird. Eine druckfeste und dauerhafte Verbindung des Wandinnenkonus mit dem Behälterkörper kann beispielsweise durch Vibrations-, Rotations- oder Induktionsschweißen oder durch das Verschweißen mit einem über die Fügefläche verlegten Widerstandsdraht erfolgen.

Es ist gemäß der Druckschrift möglich, dass der Behälterboden aus Metall hergestellt ist. Der Behälterboden kann beispielsweise aus Stahl, Aluminium oder Titan hergestellt sein. In einem Behälterboden aus Metall können in einfacher Weise Anschlüsse und Ventile für das Befüllen und Entleeren des Druckbehälters angeordnet und festgelegt sein. Die Dichtung zwischen Behälterboden und Wandinnenkonus der Verschlusseinrichtung wird bei dieser technischen Lösung über die Andruckfläche erzeugt. Die notwendige Druckdichtung wird bei steigendem Innendruck des Druckbehälters durch den radial nach außen drückenden Behälterboden erzeugt, wobei zur sicheren Abdichtung auf der Andruckfläche des Wandinnenkonus eine in Umfangsrichtung umlaufende Dichtung angeordnet ist, die in eine ebenfalls umlaufende Nut in dem Wandinnenkonus eingelassen und darin festgelegt ist.

Der Erfindung liegt von dem Stand der Technik ausgehend die Aufgabe zugrunde, ein Strukturbauteil eines Fahrgestellrahmens eines Fahrzeuges mit einem integrierten Druckbehälter (Tank) zu schaffen, welches bei einem geringen Gewicht eine hohe Steifigkeit aufweist und das eine dauerhaft hohe Dichtheit des Druckbehälters gewährleistet.

Ausgangspunkt der Erfindung ist ein Strukturbauteil für einen Fahrgestellrahmen eines Fahrzeuges, welches zur Befestigung an dem Fahrgestellrahmen mindestens einseitig ein flanschartiges Ende oder beidseitig flanschartige Enden, sogenannte Flanschenden umfasst, das/die jeweils auf ihrer rahmenabgewandten Seite einen Flanschkragen aufweisen.

Erfindungsgemäß ist vorgesehen, dass der mindestens eine Flanschkragen zumindest auf seiner Außenmantelfläche eine formschlüssige schichtartige Umspritzung aus einem gasdichten Thermoplastwerkstoff aufweist, wobei die kragenabgewandte Manteloberfläche der Umspritzung einen Verbindungsbereich mit einer Verbindungsfläche einer Innenmantelfläche eines mindestens einseitig offenen oder beidseitig offenen Druckbehälterkörpers bildet, der ebenfalls zumindest in dem mindestens einen Verbindungsbereich oder vollständig aus einem gasdichten Thermoplastwerkstoff ausgebildet ist, sodass in dem mindestens einen Verbindungsbereich zwischen dem mindestens einen zumindest teilweise umspritzten Flanschkragen und dem Druckbehälterkörper im Zusammenbauzustand eine form- und stoffschlüssige sowie gasdichte Thermoplast-Verbindung ausgebildet ist, sodass im Zusammenbauzustand das mindestens einseitig angeordnete flanschartige Ende und der zugehörige Flanschkragen mindestens einen Druckbehälterboden einseitig oder beidseitig des Druckbehälterkörpers als Druckbehälter insgesamt ausbildet. Der Vorteil besteht darin, dass der Verbindungsbereich geschaffen ist, dessen Verbindungspartner zumindest in dem Verbindungsbereich (Flanschkragen und Druckbehälterkörper) jeweils aus einem Thermoplastwerkstoff ausgebildet sind. Dadurch kann der Anwender frei wählen aus welchem Material er den Flanschkragen herstellt. Die Anordnung der Umspritzung an die Flanschkragen hat somit den Effekt, dass beispielsweise ein metallisches Bauteil, insbesondere das flanschartige Ende mit dem Flanschkragen mit dem Druckbehälterkörper verbunden werden kann, wobei der Druckbehälterkörper entweder aus einem Thermoplastwerkstoff oder aus einem anderen Werkstoff ausgebildet ist, wobei lediglich sichergestellt werden muss, dass der Druckbehälterkörper im Verbindungsbereich einen Thermoplastwerkstoff aufweist, so dass die erfindungsgemäße Verbindung der genannten Komponenten, über die Thermoplastwerkstoff/Thermoplastwerkstoff-Verbindung verbindbar sind. Die Verbindung ist in vorteilhafter Weise formschlüssig, stoffschlüssig und bei entsprechender Auswahl des Thermoplastwerkstoffs gasdicht.

In bevorzugter Ausgestaltung der Erfindung ist vorgesehen, dass das mindestens eine flanschartige Ende als Flanschplatte ausgebildet ist, die auf ihrer rahmenabgewandten Seite den Flanschkragen aufweist, wobei die Flanschplatte und der zugehörige Flanschkragen aus einem metallischen Leichtbaumaterial, insbesondere Aluminium ausgebildet sind. Der Vorteil besteht darin, dass das Strukturbauteil insgesamt aus sehr leichtem Material herstellbar ist, wenn beispielsweise der Druckbehälterkörper vollständig aus einem Thermoplastwerkstoff und das Flanschende oder die Flanschenden aus einem Leichtbaumaterial hergestellt ist/sind. Die notwendige Umspritzung benötigt nur einen geringen Materialbedarf, sodass durch sie das Gewicht des Strukturbauteiles nur geringfügig erhöht wird.

Ferner ist bevorzugt vorgesehen, dass die mindestens einseitig angeordnete Flanschplatte des Flanschendes und der zugehörige Flanschkragen auf seiner rahmenabgewandten Seite halbschalenartig ausgebildet sind, und den mindestens einen halbschalenartigen Druckbehälterboden bilden, wobei sich zwei halbschalenartige Druckbehälterböden bei einer beidseitigen Anordnung der flanschartigen Enden im Zusammenbauzustand gegenüberliegen. Der Vorteil besteht darin, dass durch diese geometrische Ausgestaltung das Flanschende einen typischen halbschalenförmigen und damit strukturfesten Druckbehälterboden bilden, der sehr hohe Kräfte aufnehmen kann. In vorteilhafter Weise bildet die Flanschplatte und der Flanschkragen, mithin das Flanschende somit sowohl das Befestigungselement an dem Fahrzeugrahmen aus und ist gleichzeitig auf der zu dem Druckbehälterkörper gerichteten Seite als Druckbehälterboden ausgebildet.

Als Umspritzung schlägt die Erfindung verschiedene Ausführungsvarianten vor.

In einer ersten Ausführungsvariante ist eine Thermoplast-Umspritzung als Ring auf der Außenmantelfläche des Flanschkragens angespritzt ist. Der Vorteil besteht darin, dass bei dieser Ausführungsvariante nur wenig Material benötigt wird und die Ausgestaltung als Ring einfach realisierbar ist.

In einer zweiten Ausführungsvariante ist eine Thermoplast-Umspritzung als Ring auf der Außenmantelfläche des Flanschkragens mit einem radial abstehenden Bord angespritzt, der auf der rahmenabgewandten Seite der Flanschplatte angespritzt ist. Der Vorteil besteht darin, dass die Thermoplast-Umspritzung auf dem metallischen Flanschkragen und dem radial abstehenden Bord der Flanschplatte und dem aus einem Thermoplastwerkstoff hergestellten Druckbehälterkörper einen Korrosionsschutz herstellt sobald in dem Thermoplastwerkstoff des Druckbehälterkörpers metallische Bestandteile zum Einsatz kommen. Beispielsweise kann der Druckbehälterkörper zumindest im Bereich der Fügeverbindung zu dem Flanschende oder vollständig aus einer Materialkombinationen aus kohlefaserverstärktem Kunststoff (CFK) und Aluminium hergestellt sein. Das Flanschende ist bevorzugt ebenfalls aus einem metallischen Material hergestellt. Die Thermoplast-Umspritzung gemäß der zweiten Ausführungsvariante schafft dann in vorteilhafter Weise die Trennung der metallischen Materialien und schützt das Strukturbauteil in diesem Bereich vor Korrosion.

In einer dritten Ausführungsvariante ist vorgesehen, dass eine Thermoplast-Umspritzung vollständig angespritzt ist, das heißt die Flanschplatte des Flanschendes und der Flanschkragen mithin das Flanschende insgesamt ist vollständig umspritzt. Der Vorteil besteht darin, dass das Flanschende komplett mit der Thermoplasten-Umspritzung versehen ist, so dass durch die vollständige Umspritzung vermieden wird, dass Gase mit kriechenden Eigenschaften zwischen der Außenseite des Flanschendes, insbesondere der Außenseite des Flanschkragens und der Innenseite der Umspritzung hindurch diffundieren. Mit anderen Worten, bei der dritten Ausführungsvariante ist absolut sichergestellt, dass der Druckbehälterkörper und der Druckbehälterboden auch unter Berücksichtigung von möglichem Kriechverhalten von Gasen dauerhaft abgedichtet ist.

In einer bevorzugten Ausgestaltung des Strukturbauteils ist vorgesehen, dass mindestens einer der Thermoplastwerkstoffe oder beide Thermoplastwerkstoffe der Umspritzungen und des Druckbehälterkörpers ein Faserthermoplastverbundmaterial ist. Der Vorteil besteht darin, dass die Strukturfestigkeit der Umspritzung und des Druckbehälterkörpers an die notwendigen Festigkeitsanforderungen hinsichtlich des zu erwartenden Krafteintrages in die genannten Komponenten erhöht bzw. angepasst werden kann. Die jeweilige Anordnung der Fasern, insbesondere auch hinsichtlich der Ausrichtung der Fasern innerhalb des Druckbehälterkörpers und/oder innerhalb der Umspritzung kann auf die zu erwartende Richtung des Krafteintrages in die genannten Komponenten angepasst werden, um eine möglichst hohe Strukturfestigkeit zu erzeugen.

Die Erfindung schlägt zudem vor, dass auf der Außenmantelfläche des mindestens einen Flanschkragens mindestens eine oberflächenvergrößernde Struktur ausgebildet ist, die in der Beschreibung detailliert erläutert sind. Der Vorteil solcher oberflächenvergrößernden Strukturen besteht darin, dass sichergestellt ist, dass die Verbindung zwischen der Umspritzung und den Flanschkragen eine hohe Festigkeit aufweist. In dieser Verbindung besteht, aufgrund der erfindungsgemäß angedachten Verwendung von unterschiedlichen Materialien (Thermoplastwerkstoff für Umspritzung und metallisches Leichtbaumaterial für den Flanschkragen) kein Stoffschluss. Die hochfeste Verbindung wird somit durch Formschluss und Reibschluss zwischen den Komponenten erzeugt. Durch die Erhöhung der Oberfläche der Struktur des Flanschkragens kann somit eine form- und reibschlüssig wirkende Verbindung hergestellt werden, die gegenüber dem Stand der Technik erhöhte Kräfte aufnehmen kann.

Das Verfahren zur Herstellung eines Strukturbauteils (ohne oberflächenvergrößernde Strukturen anzuordnen) zeichnet sich prinzipiell durch folgende Schritte:
a) Vorfertigung mindestens eines Druckbehälterbodens.
b) Zumindest teilweise formschlüssige Umspritzung des mindestens einen Druckbehälterbodens mit einem Thermoplastwerkstoff.
c) Vorfertigung eines einseitig oder beidseitig offenen Druckbehälterkörpers, der zumindest in dem mindestens einen Verbindungsbereich zu der Umspritzung aus einem Thermoplastwerkstoff besteht.
d) Einseitige oder beidseitige form- und stoffschlüssige Verbindung der zumindest teilweise angeordneten Umspritzung des mindestens einen Druckbehälterbodens in dem mindestens einen Verbindungsbereich zu dem einseitig oder beidseitig offenen Druckbehälterkörper, der zumindest in dem mindestens einen Verbindungsbereich aus einem Thermoplastwerkstoff besteht, wodurch der mindestens eine Druckbehälterboden und der Druckbehälterkörper miteinander einseitig oder beidseitig stoff- und formschlüssig sowie gasdicht zu einem Druckbehälter verbunden sind.

Bevorzugt umfasst das erfindungsgemäße Verfahren einen zusätzlichen Schritt a1), der vor dem Schritt b) durchgeführt wird, um oberflächenvergrößernde Strukturen anzuordnen, der darin besteht, dass mindestens eine oberflächenvergrößernde Struktur auf der Außenmantelfläche des Flanschkragens des mindestens einen Druckbehälterbodens ausgebildet wird.

Schließlich wird erfindungsgemäß vorgeschlagen, dass die form- und stoffschlüssige Verbindung durch Vibrations-, Rotations- oder Induktionsschweißen in dem mindestens einen Verbindungsbereich der Innenmantelfläche des zumindest im Verbindungsbereich aus einem Thermoplastwerkstoff bestehenden Druckbehälterkörpers und der kragenabgewandten Manteloberfläche der jeweiligen Umspritzung analog zu der Druckschrift DE 10 2016 110 803 A1 durchgeführt wird, wobei der Unterschied zu dieser Druckschrift DE 10 2016 110 803 A1 darin besteht, dass kein Wandinnenkonus mit dem Behälterkörper verbunden wird, sondern dass eine auf einem Flanschkragen außen liegende Umspritzung hergestellt wird, so dass der Druckbehälterkörper gemäß der Erfindung auf den Flanschkragen sozusagen aufgeschoben wird und mit einem der genannten Verfahren die form-und stoffschlüssige hergestellt werden kann, die wie erläutert auch gasdicht ist.

Analog dazu wird erfindungsgemäß vorgeschlagen, dass die form- und stoffschlüssige Verbindung durch das Verschweißen mittels mindestens eines erhitzbaren Widerstandsdrahtes erfolgt, wobei der mindestens eine Widerstandsdraht in einem Fügebereich im Verbindungsbereich zwischen der Innenfläche des zumindest im Verbindungsbereich aus einem Thermoplastwerkstoff bestehenden Druckbehälterkörper und der kragenabgewandten Manteloberfläche der jeweiligen Umspritzung angeordnet ist, wobei gegenüber dem Stand der Technik der Druckschrift DE 10 2016 110 803 A1 vorgesehen ist, dass kein Wandinnenkonus mit dem Behälterkörper verbunden wird, sondern dass eine auf einem Flanschkragen außen liegende Umspritzung hergestellt wird, auf der in einfacher Weise der erhitzbare Widerstandsdraht aufgelegt wird, wonach der Druckbehälterkörper gemäß der Erfindung auf den Flanschkragen sozusagen aufgeschoben wird, sodass durch die Erwärmung des Widerstandsdrahtes der form-und stoffschlüssig hergestellt werden kann, der wie erläutert auch gasdicht ist. Die gewählten Thermoplasten innerhalb dieser Verbindung verschmelzen sozusagen in vorteilhafter Weise zu einem gasdichten Bauteil, wobei diese Verbindung in vorteilhafter Weise sehr hohe Kräfte aufnehmen kann.

Die Erfindung wird nachfolgend anhand der zugehörigen Zeichnungen erläutert. Es zeigen:
- Figur 1A: einen Fahrgestellrahmen eines Nutzfahrzeuges in einer perspektivischen Darstellung mit einem als Einzelheit herausgezogenen Querträger als Strukturbauteil des Fahrgestellrahmens nach dem Stand der Technik;
- Figur 1B: den Querträger gemäß Figur 1A in einer perspektivischen Darstellung gemäß der in Figur 1A dargestellten Einzelheit I;
- Figur 2A: ein Schnitt durch das als Querträger ausgebildete Strukturbauteil im Bereich eines als Flansch mit einem Flanschkragen ausgebildeten Druckbehälterboden mit einem Druckbehälterkörper zur Verdeutlichung der Verbindung zwischen Druckbehälterboden und Druckbehälterkörper in einer ersten Ausführungsvariante;
- Figur 2B: ein positionsgetreuer Schnitt gemäß Figur 2A durch das als Querträger ausgebildete Strukturbauteil im Bereich eines als Flansch mit dem Flanschkragen ausgebildeten Druckbehälterboden mit einem Druckbehälterkörper zur Verdeutlichung der Verbindung zwischen Druckbehälterboden und Druckbehälterkörper in einer zweiten Ausführungsvariante;
- Figur 2C: der positionsgetreuer Schnitt gemäß Figuren 2A und 2B durch das als Querträger ausgebildete Strukturbauteil im Bereich eines als Flansch mit dem Flanschkragen ausgebildeten Druckbehälterboden mit einem Druckbehälterkörper zur Verdeutlichung der Verbindung zwischen Druckbehälterboden und Druckbehälterkörper in einer dritten Ausführungsvariante;
- Figur 3A: das als Querträger ausgebildete Strukturbauteil in einer perspektivischen Übersichtdarstellung gemäß einer ersten Ausführungsform;
- Figur 3B: eine perspektivische Detaildarstellung der Verbindung zwischen Behälterboden und Behälterkörper gemäß der in Figur 3A dargestellten ersten Ausführungsform in Kombination mit der ersten Ausführungsvariante gemäß Figur 2A;
- Figur 4A: das als Querträger ausgebildete Strukturbauteil in einer perspektivischen Übersichtdarstellung gemäß einer zweiten Ausführungsform;
- Figur 4B: eine perspektivische Detaildarstellung der Verbindung zwischen Behälterboden und Behälterkörper gemäß der in Figur 4A dargestellten zweiten Ausführungsform in Kombination mit der ersten Ausführungsvariante gemäß Figur 2A.

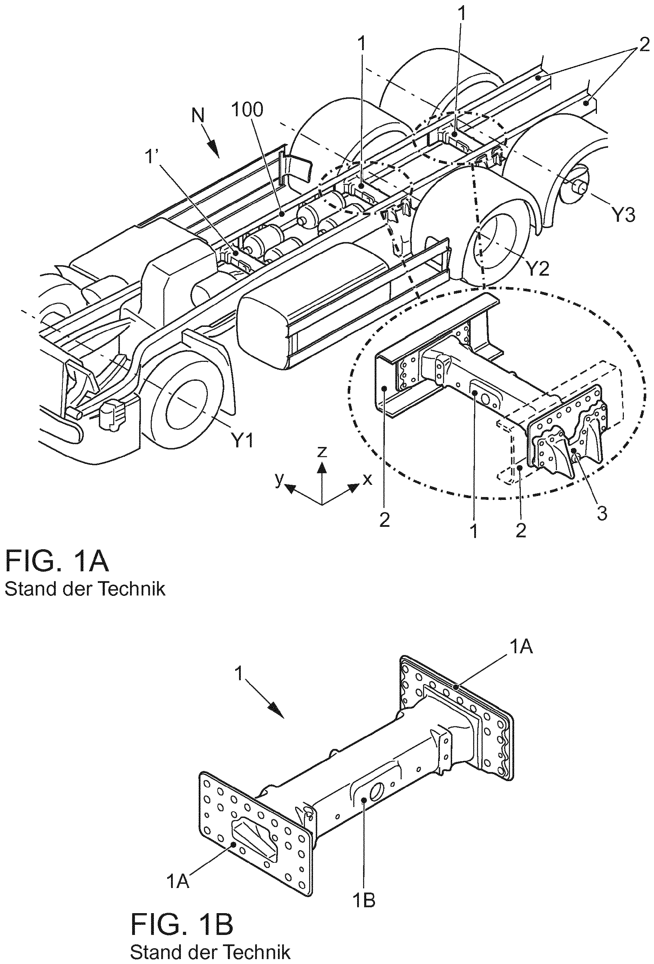

Für die Zwecke der Beschreibung (vergleiche Figur 1A) soll die in Längsrichtung eines Fahrzeuges N liegende Richtung mit "x" bezeichnet werden. Mit "y" wird die Richtung in der Horizontalen des Fahrzeuges quer zur x-Richtung bezeichnet, und mit "z" wird die Richtung in der Vertikalen des Fahrzeuges quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

Die Figur 1A zeigt einen Fahrgestellrahmen 100 eines ansonsten nicht näher dargestellten Fahrzeuges, insbesondere Nutzfahrzeuges N, in einer perspektivischen Darstellung mit einem als Einzelheit herausgezogenen Querträger 1 als Strukturbauteil des Fahrgestellrahmens 100 nach dem Stand der Technik.

Das Nutzfahrzeug N umfasst mehrere Radachsen Y1, Y2, Y3, die quer zu den Längsträgern 2 des Fahrgestellrahmens 100 angeordnet sind.

Der Fahrgestellrahmen 100 weist mehrere Querträger 1', 1 auf, wobei mindestens ein Querträger 1 gemäß der Figur 1A parallel zu einer Radachse Y2, Y3 des Nutzfahrzeuges N zumindest nahe einer Achsaufhängung 3 (vergleiche Einzelheit Figur 1B) angeordnet ist.

Der in Figur 1A als Einzelheit herausgezogene Querträger 1 weist eine Längsachse Y auf, in dessen Verlängerung unmittelbar die Achsaufhängung 3 ausgebildet ist.

Der mit 1' bezeichnete Querträger liegt im Unterschied zu den Querträgern 1 von den Radachsen Y1, Y2 entfernt und weist somit in seiner Verlängerung keine Achsaufhängung auf.

Die zwischen den Längsträgern angeordneten Querträger 1, 1' werden auf Zug, Druck, Biegung und Torsion beansprucht, wobei die nahe einer Achsaufhängung 3 und/oder die unmittelbar in Verlängerung der Achsaufhängung 3 angeordneten Querträger 1 größere Zugkräfte, Drucckräfte, Biegungskräfte und Torsionskräfte aufnehmen müssen als ein Querträger 1', der fern einer Achsaufhängung 3 angeordnet ist.

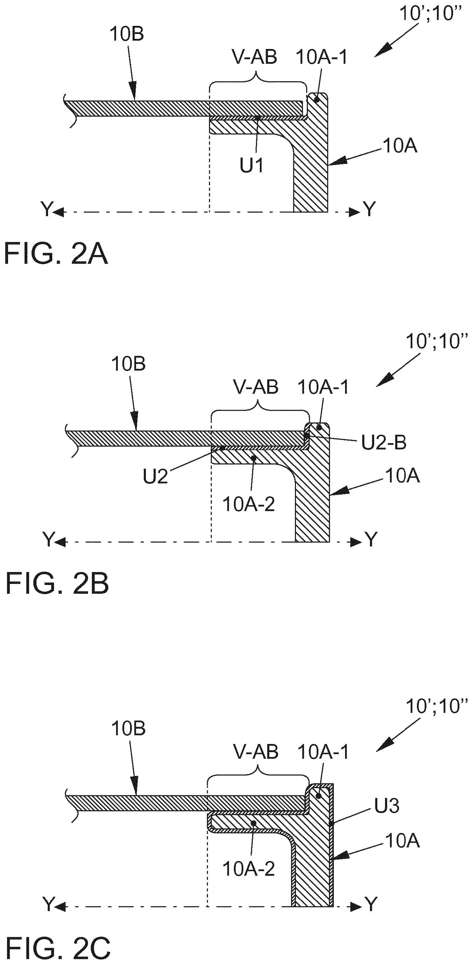

Ein erfindungsgemäß mit den Bezugszeichen 10',10" versehener Querträger (vergleiche die nachfolgenden Figuren 2A bis 4B) ist sowohl nahe einer Achsaufhängung 3 und/oder unmittelbar in Verlängerung der Achsaufhängung 3 gemäß dem herkömmlichen Querträger 1 und/oder fern einer Achsaufhängung 3 gemäß dem herkömmlichen Querträger 1' anordbar. Wie in den Figuren 1A und 1B gezeigt, sind die einteiligen Querträger 1 aus Gusseisen, während die einteiligen Querträger 1' als Stahlkonstruktion ausgeführt sind. Sie weisen Flansche beziehungsweise so genannte Flanschenden 1A auf.

Die Flanschenden 1A dienen einerseits der Befestigung des zwischen den Flanschenden 1A als Hohlprofil 1B ausgebildeten Querträgers 1, 1' an den jeweils zumeist als U-Profil ausgebildeten Längsträgern 2 und andererseits in dem in Figur 1A in der Einzelheit gezeigten Ausführungsbeispiel, bei dem der Querträger 1 unmittelbar in Verlängerung der Achsaufhängung 3 angeordnet ist. Die Achsaufhängung 3 wird mit denselben Schrauben wie der Querträger 1, 1' an den Längsträgern 2 befestigt. Die Schrauben werden durch die Achsaufhängung 3, den Längsträger 2 und das Flanschende 1A gesteckt und auf der Innenseite der Flanschplatten der Flanschenden 1A in Mutterplatten eingeschraubt.

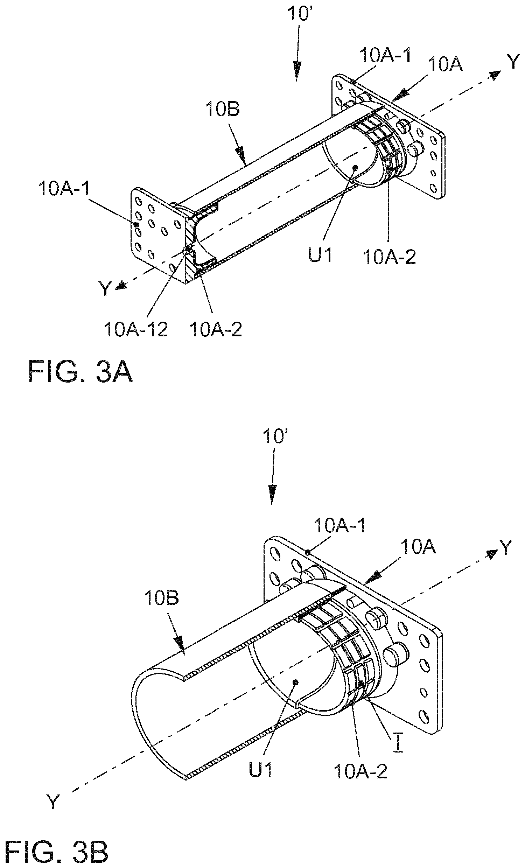

Der nachfolgend anhand der Figuren 2A, 2B , 2C und 3A und 3B (erste Ausführungsform) und 4A und 4B (zweite Ausführungsform) erläuterte erfindungsgemäße Querträger 10',10"stellt ein Strukturbauteil eines Fahrgestellrahmens 100 eines Fahrzeuges dar, der in vorteilhafter Weise als Druckbehälter (Tank) ausgebildet ist, wobei der Querträger 10',10"in vorteilhafter Weise ein geringes Gewicht und eine hohe Steifigkeit aufweist und zudem gasdicht ausgebildet ist.

Der erfindungsgemäße Querträger 10',10"ist ausgelegt, um die nahe einer Achsaufhängung 3 und/oder unmittelbar in Verlängerung der Achsaufhängung 3 und/oder die fern einer Achsaufhängung 3 über die Längsträger 2 in den Querträger 10',10"eingeleiteten maximal auftretenden Zugkräfte, Druckkräfte, Biegungskräfte und Torsionskräfte aufzunehmen.

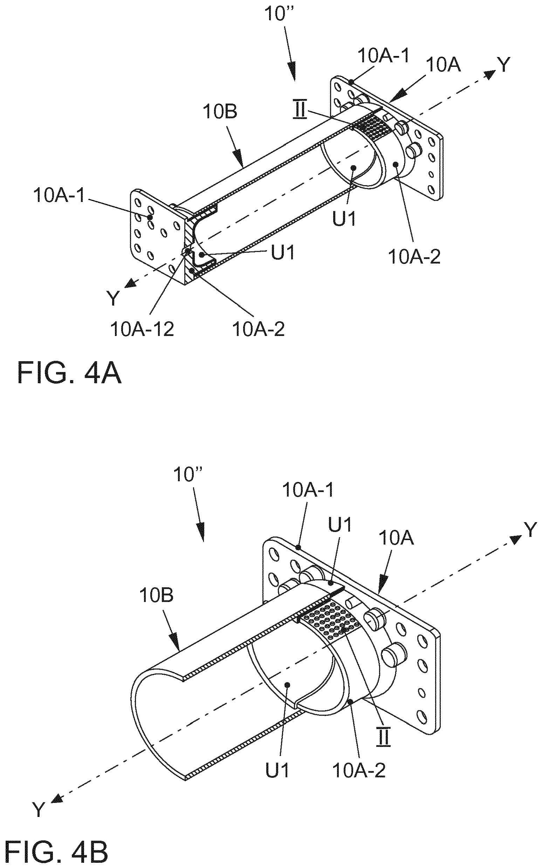

Zunächst wird auf die Figuren 3A und 4A verwiesen, wobei Figur 3A das als Querträger 10' ausgebildete Strukturbauteil in einer perspektivischen Übersichtdarstellung gemäß der ersten Ausführungsform und Figur 4A das als Querträger 10" ausgebildete Strukturbauteil in einer perspektivischen Übersichtdarstellung gemäß der zweiten Ausführungsform zeigt.

Die erfindungsgemäßen Querträger 10', 10" weisen Flanschenden 10A auf, die sich erfindungsgemäß von den Flanschenden 1A der herkömmlichen Querträger 1, 1' nach dem Stand der Technik gemäß den Figuren 1A und 1B unterscheiden.

Zur Reduzierung des Gewichts wird der Querträger mehrteilig ausgebildet und in einem erfindungsgemäßen Herstellungsverfahren, welches nachfolgend noch erläutert wird, werden die einzelnen vorgefertigten Komponenten miteinander verbunden beziehungsweise innerhalb des Herstellungsverfahrens erzeugt und zu einem Zusammenbauteil in einer Leichtbauweise hergestellt.

Mit anderen Worten, die erfindungsgemäßen Querträger 10', 10" umfassen vorgefertigte Komponenten 10A und 10B, die erst innerhalb des Herstellungsverfahrens zu einem Zusammenbau-Teil zu dem erfindungsgemäßen Querträger 10', 10" miteinander verbunden werden.

Die erste vorgefertigte Komponente sind die Flanschenden 10A, welche gleichzeitig die Druckbehälterböden des Druckbehälters bilden.

Die zweite vorgefertigte Komponente ist ein beidseitig offener Druckbehälterkörper 10B (der im Zusammenbauzustand zwischen Druckbehälterböden) zwischen den Flanschenden 10A, der gleichzeitig den Korpus des Druckbehälters und den Korpus des Querträgers des Strukturbauteiles bildet.

Der als Querträger 10',10"ausgebildete Druckbehälter 10', 10" umfasst somit den Druckbehälterkörper 10B und die gegenüberliegenden Druckbehälterböden 10A, wobei in mindestens einem der Druckbehälterböden 10A eine Flanschöffnung 10A-12 (vergleiche Figuren 3A und 4A) aufweist, über die ein Fluid dem Druckbehälter zugeführt und/oder angeführt werden kann.

Die Druckbehälterböden 10A:
Die Druckbehälterböden sind als Flanschenden 10A ausgebildet.

Die Flanschenden 10A umfassen, eine Flanschplatte 10A-1 und einen Flanschkragen 10A-2, wobei die Flanschkragen 10A-2 im Zusammenbauzustand den Druckbehälterkörper 10B aufnehmen, der noch erläutert wird.

Die Flanschenden 10A beziehungsweise die Flansche werden aus Stahl oder einem Stahlgussmaterial oder bevorzugt aus einem Leichtbaumaterial, insbesondere einem Aluminiummaterial oder einem Kunststoffmaterial, vorgefertigt.

Die Flanschenden 10A sind einteilig bevorzugt aus Aluminium hergestellt und entweder gegossen oder aus einem Vollmaterial ausgefräst. Es versteht sich, dass eine mehrteilige Ausgestaltung und darauffolgende Verbindung der mehreren Teile zu dem Flanschende 10A nicht ausgeschlossen ist.

Aufgrund der hohen Anzugsmomente werden die Flanschplatten 10A-1 der Flanschenden 10A mit Öffnungen (vergleiche Figuren 3A und 4A) versehen, um die Flanschenden 10A über eine Durchsteckverschraubung mit den Längsträgern 2 verbinden zu können.

Dort, wo bauraumbedingt keine Durchsteckverschraubungen realisiert werden können, werden Gewindebuchsen in Sacklöcher eingeschraubt, um die Schrauben und auftretenden Anzugsmomente aufnehmen zu können. Bevorzugt, werden Helicoils oder Gewindebuchsen mit selbstschneidendem Gewinde eingesetzt.

Die Flanschenden 10A beziehungsweise im Ausführungsbeispiel deren Flanschplatten 10A-1 gehen jeweils von der Innenseite der Flanschenden 10A ausgehend in die in Längsrichtung y (y-Richtung) weisenden Flanschkragen 10A-2 über, die sich gegenüberliegen, wobei die Innenkontur der Flanschkragen 10A-2 insbesondere halbschalenartig ausgebildet ist, sodass sich die Flanschkragen 10A-2 schalenartig gegenüberliegen.

Die Flanschkragen10A-2 weisen somit die halbschalenartige Innenkontur und eine zylindrische um Y rotationssymmetrische Außenkontur auf.

Der Druckbehälterkörper 10B:
Der vorgefertigte Druckbehälter 10B weist auf beiden Seiten eine Innenkontur mit einem Innendurchmesser auf, der unter Berücksichtigung einer im Zusammenbauzustand zwischen Druckbehälterboden 10A und Druckbehälterkorpus 10B liegenden Schicht - auf die noch eingegangen wird -, im Wesentlichen dem Außendurchmesser der Flanschkragen 10A-2 entspricht. Somit ist die Innenkontur des Druckbehälterkorpus 10B zumindest im Bereich der Verbindung mit den Druckbehälterböden 10A ebenfalls rotationssymmetrisch ausgebildet.

Die Verbindungsbereiche zwischen den Druckbehälterböden 10A und dem Druckbehälterkorpus 10B sind in den Figuren mit dem Bezugszeichen V-AB gekennzeichnet.

Der vorgefertigte Druckbehälterkörper 10B wird erfindungsgemäß aus einem Thermoplastmaterial hergestellt. Die Materialauswahl erfolgt in Abhängigkeit der gewünschten Stabilität des Druckbehälterkörpers 10B, dem Gewicht und/oder der Dichtigkeit des Druckbehälterkörpers 10B gegenüber dem im Druckbehälterkörper 10A zu bevorrateten Medium und in Abhängigkeit der physikalischen und chemischen Eigenschaften des Mediums im Druckbehälterkörper 10A.

Bevorzugt wird ein Faserthermoplastverbundmaterial gemäß der Druckschrift DE 10 2016 110 803 A1 eingesetzt. In dem Druckbehälterkörper 10B sind in Umfangsrichtung verlaufende sowie in axialer Richtung längs einer Rotationsachse beziehungsweise einer Längsachse des Druckbehälterkörpers ausgerichtete, quasi endlose Fasern eingebettet.

In einer alternativen Ausgestaltung wird der Druckbehälterkörper 10B aus einem anderen thermoplastischen Kunststoff, wie beispielsweise Polyamid (Abkürzung: PA) oder Polyoxymethylen (Abkürzung: POM), hergestellt.

Die zu dem Zusammenbauteil zusammengefügten Komponenten 10A, 10B, die vorgefertigten Druckbehälterböden 10A und der vorgefertigte Druckbehälterkörper, werden in einem weiteren Herstellungsschritt durch Vibrations-, Rotations- oder Induktionsschweißen oder durch das Verschweißen mit einem in der Fügefläche zwischen der Innenmantelfläche des Druckbehälterkörpers 10B im Verbindungsbereiche V-AB und der jeweilige Außenmantelfläche der Flanschkragen 10A-2 verlegten Widerstandsdraht stoffschlüssig miteinander verbunden.

Der Stoffschluss kann dadurch hergestellt werden, da die Druckbehälterböden 10A zumindest im Bereich der Verbindungsbereiche V-AB in einem vorhergehenden Herstellungsschritt mit einem Thermoplastwerkstoff umspritzt sind, wobei in den Figuren 2A bis 2B drei Ausführungsvarianten gezeigt sind.

Die Figur 2A zeigt einen Schnitt durch das als Querträger 10 ausgebildete Strukturbauteil im Bereich eines als Flanschende 10A mit einem Flanschkragen 10A-2 ausgebildeten Druckbehälterbodens 10A mit einem Druckbehälterkörper 10B zur Verdeutlichung der Verbindung zwischen Druckbehälterboden 10A und Druckbehälterkörper 10B in einer ersten Ausführungsvariante. Der Flanschkragen 10A-2 ist auf ihrer Außenmantelfläche mit dem Thermoplastwerkstoff umspritzt und bildet den Verbindungsbereich V-AB zu der Innenmantelfläche des Druckbehälterkörpers 10B aus.

Mit anderen Worten, der Flanschkragen 10A-2 weist gemäß der ersten Ausführungsvariante eine aus Thermoplastwerkstoff ausgebildete Umspritzung U1 in der Art eines Ringes auf. Die Ausführungsvariante ist besonders einfach und materialsparend ausbildbar.

Die Figur 2B zeigt einen Schnitt durch das als Querträger 10 ausgebildete Strukturbauteil im Bereich eines als Flanschende 10A mit einem Flanschkragen 10A-2 ausgebildeten Druckbehälterbodens 10A mit einem Druckbehälterkörper 10B zur Verdeutlichung der Verbindung zwischen Druckbehälterboden 10A und Druckbehälterkörper 10B in einer zweiten Ausführungsvariante. Der Flanschkragen 10A-2 ist auf seiner Außenmantelfläche und die Innenseite der Flanschplatte 10A-1 ist mit dem Thermoplastwerkstoff umspritzt und bildet den Verbindungsbereich V-AB zu der Innenmantelfläche des Druckbehälterkörpers 10B und zu der der Flanschplatte 10A-1 gerichteten Stirnfläche aus. Diese Ausführungsvariante ist ebenfalls besonders einfach und materialsparend ausbildbar, wobei der Vorteil darin besteht, dass ein Korrosionsschutz zwischen der metallischen Flanschplatte 10A-1 sowie dem Flanschkragen 10A-2 und dem gegebenenfalls aus Kunststoff in Kombination mit metallischen Bestandteilen (beispielsweise CFK-Aluminium-Laminat) gebildeten Druckbehälterkörper 10B erzeugt wird. Zudem wird der Verbindungsbereich V-AB in vorteilhafter Weise gegenüber der ersten Ausführungsvariante in radialer Richtung vergrößert.

Mit anderen Worten, der Flanschkragen 10A-2 weist gemäß der zweiten Ausführungsvariante eine aus Thermoplastwerkstoff ausgebildete Umspritzung U2 in der Art eines Ringes U2 mit einem radial abstehenden Bord U2-B auf.

Die Figur 2C zeigt einen Schnitt durch das als Querträger 10 ausgebildete Strukturbauteil im Bereich eines als Flanschende 10A mit einem Flanschkragen 10A-2 ausgebildeten Druckbehälterbodens 10A mit einem Druckbehälterkörper 10B zur Verdeutlichung der Verbindung zwischen Druckbehälterboden 10A und Druckbehälterkörper 10B in einer dritten Ausführungsvariante. Das gesamte Flanschende 10A ist auf seiner Außenmantelfläche mit dem Thermoplastwerkstoff umspritzt. Der Vorteil dieser dritten Ausführungsvariante besteht darin, dass ein Korrosionsschutz analog zu der zweiten Ausführungsvariante zwischen der metallischen Flanschplatte 10A-1 und dem beispielsweise aus CFK-Aluminium-Laminat gebildeten Druckbehälterkörper 10B erzeugt wird. Zudem wird der Verbindungsbereich V-AB gegenüber der ersten Ausführungsvariante in radialer Richtung (analog zur zweiten Ausführungsvariante) und darüber hinaus unter Nutzung der gesamten Manteloberfläche des Flanschendes 10A in vorteilhafter Weise vergrößert. Schließlich wird sichergestellt, dass insbesondere ein gasförmiges oder flüssiges Medium - durch die vollständige Umspritzung U3 - nicht den Verbindungsbereich V-AB durchdringen beziehungsweise unterwandern kann.

Mit anderen Worten, der in den Figuren 2A, 2B dargestellte schichtenartige Aufbau, der gegebenenfalls über die Lebensdauer des Druckbehälters 10', 10" von dem gasförmigen oder flüssigen Medium durch Kriechen des Mediums Undichtigkeiten zeigt, wird durch die geschlossene Umspritzung U3 ersetzt, sodass ein Kriechen des Mediums vermieden wird. Der Flanschkragen 10A-2 weist gemäß der dritten Ausführungsvariante die aus Thermoplastwerkstoff ausgebildete vollständige Umspritzung U3 in der Art eines Überzuges um das gesamte Flanschende 10A auf.

In allen Ausführungsvarianten erfolgt die Umspritzung vorab in einem Spritzgusswerkzeug in einem Spritzgussverfahren, wobei die vorgefertigten Druckbehälterböden 10A entsprechenden eingelegt und umspritzt werden. Es wird in vorteilhafter Weise eine formschlüssige feste Verbindung zwischen dem Druckbehälterboden und der jeweiligen Umspritzung U1, U2, U3 hergestellt.

Bevorzugt wird das Thermoplastmaterial verwendet, aus dem auch der Druckbehälterkörper 10B hergestellt wird. Zudem besteht bei der Herstellung der Umspritzung U1, U2, U3 analog zu der Herstellung des Druckbehälterkörpers die Möglichkeit, dass ein Faserthermoplastverbundmaterial eingesetzt wird. In der jeweiligen Umspritzung U1, U2, U3 sind dann in Umfangsrichtung verlaufende sowie in axialer Richtung längs der Rotationsachse Y beziehungsweise der Längsachse Y des Druckbehälters 10', 10" ausgerichtete, quasi endlose Fasern eingebettet.

Da die gewählten Thermoplastmaterialien mit den Komponenten 10A, 10B, wie nachfolgend erläutert wird, eine stoffschlüssige Verbindung eingehen sollen, ist es von Vorteil, wenn die Eigenschaften des Thermoplastmaterials des Druckbehälterkörpers 10B und die Eigenschaften des Thermoplastmaterials der jeweiligen Umspritzung U1, U2, U3 im Wesentlichen darin übereinstimmen, dass ein sehr guter Stoffschluss gewährleistet wird.

Das erfindungsgemäße Verfahren zur Herstellung des als Querträger hergestellten Druckbehälters 10', 10" zeichnet sich somit im Wesentlichen durch folgende Schritte aus:
a) Vorfertigung mindestens der Druckbehälterböden 10A gemäß der vorherigen Beschreibung,
   a1) Anordnung einer oberflächenvergrößernden Struktur I, II, III auf der Außenmantefläche des Flanschkragens 10A-2 des mindestens einen Druckbehälterbodens (10A).
b) formschlüssige Umspritzung U1, U2, U3 der Druckbehälterböden 10A gemäß der vorherigen Beschreibung,
c) Vorfertigung des Druckbehälterkörpers 10B gemäß der vorhergehenden Beschreibung,
d) stoffschlüssige Verbindung der Umspritzung U1, U2, U3 der Druckbehälterböden 10A mit dem Druckbehälterkörper 10B, wodurch die Druckbehälterböden 10A und der Druckbehälterkörper 10B miteinander stoff- und formschlüssig sowie gasdicht verbunden sind.

Wie erwähnt, wird für die stoffschlüssige Verbindung und die gleichzeitige Abdichtung gegen Austritt eines flüssigen oder gasförmigem Mediums ein Kunststoffschweißverfahren angewandt, wobei insbesondere Vibrations-, Rotations- oder Induktionsschweißen oder die Anordnung eines erwärmbaren Widerstandsdrahtes in der Fügefläche vorgeschlagen werden. Durch das Aufschmelzen der stoffschlüssig zu verbindenden Thermoplastmaterialien des Druckbehälterbodens 10A mit der jeweiligen Umspritzung U1, U2, U3 und des Druckbehälterkörpers 10B wird eine Verbindung hergestellt, die hohe Kräfte übertragen kann. Es versteht sich, dass bei dieser stoffschlüssigen Verbindung gleichzeitig auch eine formschlüssige Verbindung zwischen den Druckbehälterböden 10A und dem Druckbehälterkörper 10B hergestellt wird. Diese Verbindung solle insgesamt sicherstellen, dass zwischen den Komponenten 10A und 10B keine Relativbewegungen stattfinden. Das heißt, die Verbindung muss derart ausgebildet sein, dass hohe Kräfte und Momente aufgenommen werden können.

Wie bereits erläutert, wird durch die Überdeckung der Komponenten 10A, 10B innerhalb des Verbindungsbereiches V-AB eine große Kraftübertragung gewährleistet.

Die erfindungsgemäße Lösung, schlägt zur weiteren Erhöhung der aufzunehmenden Kräfte und Momente einen weiteren Schritt vor, der darin besteht, dass nicht nur die Überdeckung der Komponenten 10A, 10B im Verbindungsbereich V-AB für die Kraftübertragung zur Verfügung stehen, sondern dass die aktive Oberfläche/n mindestens einer der Komponenten 10A, 10B innerhalb des Verbindungsbereiches V-AB vergrößert ausgebildet ist/sind.

Dazu werden nachfolgend zwei Ausführungsformen erläutert.

Die Figur 3A zeigt das als Querträger 10' ausgebildete Strukturbauteile in einer perspektivischen Übersichtdarstellung gemäß der ersten Ausführungsform.

Die Figur 3B zeigt eine perspektivische Detaildarstellung der Verbindung zwischen dem Druckbehälterkörper 10B und den Druckbehälterböden 10A der in Figur 3A dargestellten ersten Ausführungsform in Kombination mit der ersten Ausführungsvariante gemäß Figur 2A, bei der die Druckbehälterböden 10A eine ringförmige Umspritzung U1 aufweisen.

In der Zusammenschau der Figuren 3A und 3B wird deutlich, dass auf der zu der Umspritzung U1 liegenden Mantelfläche des Flanschkragens 10A-2 oberflächenvergrößernde Strukturen I ausgebildet sind.

Erste oberflächenvergrößernde Struktur I:
In der ersten Ausführungsform ist eine Struktur aus mehreren Rechtecken ausgebildet, die durch in das Material des Flanschkragens 10A-2 erzeugten Nuten gebildet ist. Bevorzugt werden die Rechtecke mit abgerundeten Kanten versehen, so dass die Außenmanteloberfläche des Flanschkragens 10A-2 noch weiter erhöht wird. Die erfindungsgemäße oberflächenvergrößernde Struktur I auf der Mantelfläche des Flanschkragens 10A-2 ähnelt der Struktur einer Schokoladentafel. In vorteilhafter Weise wird somit der Formschluss im Verbindungsbereich V-AB zwischen den stoffschlüssig verbundenen Fügepartnern 10A, 10B verbessert, so dass größere Kräfte übertragen werden können.

Erfindungsgemäß kann die Größe des umspritzten Verbindungsbereichs V-AB variiert werden, das heißt die axiale Länge des Flanschkragens 10A-2 in y-Richtung und damit die Überdeckung kann nach Bedarf verlängert oder verkürzt werden.

Gemäß der ersten Ausführungsform, kann die Anzahl der Nuten variiert werden.

Dabei ist es in bevorzugten Ausgestaltungen möglich, dass die Nuten (wie dargestellt) gerade sind oder geschwungen oder kreisförmig oder optisch oder trapezförmig ausgebildet.

Dabei kann zudem die Querschnittsform, insbesondere die Höhe und/oder Breite und/oder die geometrische Kontur der Nuten variieren.

Eine zweite Ausführungsform ist in den Figuren 4A, 4B gezeigt.

Die Figur 4A zeigt das als Querträger 10" ausgebildete Strukturbauteil in einer perspektivischen Übersichtdarstellung gemäß der ersten Ausführungsform.

Die Figur 4B zeigt eine perspektivische Detaildarstellung der Verbindung zwischen dem Druckbehälterkörper 10B und den Druckbehälterböden 10A in Figur 4A dargestellten zweiten Ausführungsform in Kombination mit der ersten Ausführungsvariante gemäß Figur 2A, bei der die Druckbehälterböden 10A eine ringförmige Umspritzung U1 aufweisen.

Die Besonderheit bei dieser zweiten Ausführungsform besteht darin, dass gemäß einer Zusammenschau der Figuren 4A, 4B der Flanschkragen 10A-2 eine oberflächenvergrößernde Struktur dergestalt erhält, dass auf der Mantelfläche des Flanschkragens 10A-2 eine Komponente angeordnet wird, welche im Zusammenbauzustand auf ihrer zu der Umspritzung U1, U2, U3 (je nach Ausführungsvariante) weisenden Außenmantelfläche die oberflächenvergrößernde Struktur II aufweist.

Zweite oberflächenvergrößernde Struktur II:
Vorgeschlagen wird insbesondere, dass ein metallisches Blech, insbesondere ein Aluminiumblech tiefgezogen wird, so dass auf der zu der Umspritzung U1, U2, U3 weisenden Außenmantelfläche sogenannte Näpfe ausgebildet sind. Das in einem Vorfertigungsschritt eine Lage hergestellte Blechteil kann in einfacher Weise um den Flanschkragen 10A-2 gelegt und mit ihm verschweißt werden. Es versteht sich, dass auch, wie in den Figuren dargestellt, eine nur lokale Anordnung die oberflächenvergrößernde Struktur II aufweisende Aluminiumblech möglich ist, welches den Flanschkragen 10A-2 nicht vollständig umgreift. In diesem Fall kann das Aluminiumblech ein Einleger oder ein Aufleger sein.

Auch ein ringförmiges Aluminiumblech mit oberflächenvergrößernder Struktur II kann auf den Flanschkragen 10A-2 aufgelegt und verschweißt werden oder das Material des Flanschkragens 10A-2 kann um die Dicke des ringförmigen Aluminiumblechs reduziert werden, sodass die Materialdicke insgesamt nicht anwächst.

Dritte oberflächenvergrößernde Struktur III:
In einer dritten nicht dargestellten Ausführungsform werden auf der Mantelfläche des Flanschkragens 10A-2 Pins, in der Art von in Längserstreckung gesehen durchmessergleichen Spitzen oder in Längserstreckung gesehen Spitzen mit ansteigendem oder abfallenden Durchmessern oder Streichhölzern mit Streichholzköpfen oder Halmakegeln oder dergleichen angeordnet, insbesondere angeschweißt, sodass ebenfalls eine Vergrößerung der Außenmantelfläche des Flanschkragens 10A-2 gewährleistet ist.

Das erfindungsgemäße Verfahren zur Herstellung des als Querträger hergestellten Druckbehälters 10', 10" zeichnet sich somit unter Berücksichtigung der Ausführungsformen durch folgende Schritte aus:
a) Vorfertigung der Druckbehälterböden 10A gemäß der vorherigen Beschreibung, a1) Anordnung von oberflächenvergrößernde Strukturen I, II in Verbindungsbereich des Druckbehälterböden 10A zu der formschlüssigen Umspritzung U1, U2, U3 der Druckbehälterböden 10A
b) formschlüssige Umspritzung U1, U2, U3 der Druckbehälterböden 10A gemäß der vorherigen Beschreibung,
c) Vorfertigung des Druckbehälterkörpers 10B gemäß der vorhergehenden Beschreibung,
d) stoffschlüssige Verbindung der Umspritzung U1, U2, U3 der Druckbehälterböden 10A mit dem Druckbehälterkörper 10B, wodurch die Druckbehälterböden 10A und der Druckbehälterkörper 10B miteinander stoff- und formschlüssig sowie gasdicht zu einem Druckbehälter verbunden sind.

Wie bereits in der Beschreibungseinleitung erläutert, ermöglicht das erfindungsgemäße Verfahren, dass ein Druckbehälterkörper, der beispielsweise aus einem Thermoplastwerkstoff besteht, mittels der Umspritzung an einem metallischen Flanschende, die ebenfalls aus einem Thermoplastwerkstoff besteht, der mit dem Thermoplastwerkstoff des Druckbehälterkörpers eine hochfeste Verbindung eingehen kann, dass zwei Komponenten aus unterschiedlichen Materialien (Flanschende als Druckbehälterboden und der Druckbehälterkörper) zusammengefügt werden können, wobei die Verbindung, insbesondere bei der Verwendung von Faserthermoplastverbundmaterialien in vorteilhafter Weise derart hergestellt ist, dass die gewählte Fasermatrix der jeweilige Umspritzung je nach Ausführungsvariante auf dem Flanschende beziehungsweise des Druckbehälterkörpers mechanisch nicht beschädigt wird.

Mit anderen Worten, die Verbindung wird nicht durch Schraubverbindungen oder ähnliche Verbindungen hergestellt, welche die jeweilige Fasermatrix zerstören und damit schädigen, so dass die Festigkeit herabgesetzt ist. Die erfindungsgemäße form- und stoffschlüssige Verbindung zwischen Umspritzung und Druckbehälterkörper wird somit einerseits als ein wesentlicher Vorteil der Erfindung angesehen werden. Ein weiterer wesentlicher Vorteil besteht andererseits in der form-und reibschlüssigen Verbindung zwischen Umspritzung und Flanschkragen, wobei die form- und reibschlüssige Verbindung, insbesondere durch Beeinflussung der Oberflächenstruktur des Flanschkragens (vergleiche die Ausführungsformen I,II, III durch die Ausbildung der geometrischen Oberflächenstruktur an sich (Erhöhung des Formschlusses) und durch die Erhöhung der Verbindungsfläche (Erhöhung des Reibschlusses) hochfest ausgebildet ist.

### Bezugszeichenliste

- N: Nutzfahrzeug
- Y1, Y2, Y3: Radachsen
- 100: Fahrgestellrahmen
- 1: Querträger (Stand der Technik)
- 1': Querträger (Stand der Technik)
- 1A: Flanschenden (Stand der Technik)
- 1B: Hohlprofil
- 2: Längsträger
- 3: Achsaufhängung
- 10': Strukturbauteil, Querträger erste Ausführungsform (Erfindung)
- 10": Strukturbauteil, Querträger zweite Ausführungsform (Erfindung)
- 10A, 10B: Druckbehälter
- 10A: Druckbehälterboden, Flanschenden
- 10A-1: Druckbehälterboden, Flanschplatte
- 10A-12: Flanschöffnung
- 10A-2: Druckbehälterboden, Flanschkragen
- 10B: Druckbehälterkörper
- V-AB: Verbindungsbereich zwischen 10A und 10B
- U1: erste Umspritzung, Ring (erste Ausführungsvariante)
- U2: zweite Umspritzung, Ring mit Bord U2-B (zweite Ausführungsvariante)
- U2-B: Bord
- U3: dritte Umspritzung, vollständige Umspritzung (dritte Ausführungsvariante)
- I: oberflächenvergrößernde Strukturen (erste Ausführungsform)
- II: oberflächenvergrößernde Strukturen (zweite Ausführungsform)
- III: oberflächenvergrößernde Strukturen (dritte Ausführungsform)
- x: Längsrichtung eines Fahrzeugs
- y: Richtung in der Horizontalen quer zur Längsrichtung x
- z: Richtung in der Vertikalen quer zur Längsrichtung x-Richtung
- Y: Längsachse Querträger 10', 10"

## Patentansprüche

1. Strukturbauteil (10', 10") für einen Fahrgestellrahmen (100) eines Fahrzeuges (N), welches zur Befestigung an dem Fahrgestellrahmen (100) mindestens einseitig ein flanschartiges Ende (10A, 10A-1) oder beidseitig flanschartige Enden (10A, 10A-1) umfasst/en, das/die jeweils auf ihrer rahmenabgewandten Seite einen Flanschkragen (10A-2) aufweisen, **dadurch gekennzeichnet, dass**
• der mindestens eine Flanschkragen (10A-2) zumindest auf seiner Außenmantelfläche eine formschlüssige schichtartige Umspritzung (U1, U2, U3) aus einem gasdichten Thermoplastwerkstoff aufweist,
• wobei die kragenabgewandte Manteloberfläche der Umspritzung (U1, U2, U3) einen Verbindungsbereich (V-AB) mit einer Verbindungsfläche zu einer Innenmantelfläche eines mindestens einseitig offenen oder beidseitig offenen Druckbehälterkörpers (10B) bildet,
• der ebenfalls zumindest in dem mindestens einen Verbindungsbereich (V-AB) oder vollständig aus einem gasdichten Thermoplastwerkstoff ausgebildet ist,
• sodass in dem mindestens einen Verbindungsbereich (V-AB) zwischen dem mindestens einen zumindest teilweise umspritzten Flanschkragen (10A-2) und dem Druckbehälterkörper (10B) im Zusammenbauzustand eine form- und stoffschlüssige sowie gasdichte Thermoplast-Verbindung ausgebildet ist,
• sodass im Zusammenbauzustand das mindestens einseitig angeordnete flanschartige Ende (10A, 10A-1) und der zugehörige Flanschkragen (10A-2) mindestens einen Druckbehälterboden (10A, 10A-1, 10A-2) einseitig oder beidseitig des Druckbehälterkörpers (10B) als Druckbehälter (10A, 10B) insgesamt ausbildet.

2. Strukturbauteil (10', 10") nach Anspruch 1, **dadurch gekennzeichnet, dass** das mindestens eine flanschartige Ende (10A, 10A-1) als Flanschplatte (10A-1) ausgebildet ist, die auf ihrer rahmenabgewandten Seite den Flanschkragen (10A-2) aufweist, wobei die Flanschplatte (10A-1) und der zugehörige Flanschkragen (10A-2) aus einem metallischen Leichtbaumaterial, insbesondere Aluminium ausgebildet sind.

3. Strukturbauteil (10', 10") nach Anspruch 1 und 2, **dadurch gekennzeichnet, dass** die mindestens einseitig angeordnete Flanschplatte (10A-1) des Flanschendes (10A) und der zugehörige Flanschkragen (10A-2) auf seiner rahmenabgewandten Seite halbschalenartig ausgebildet sind, und den mindestens einen halbschalenartigen Druckbehälterboden (10A, 10A-1, 10A-2) bilden, wobei sich zwei halbschalenartige Druckbehälterböden (10A, 10A-1, 10A-2) bei einer beidseitigen Anordnung der flanschartigen Enden (10A, 10A-1) im Zusammenbauzustand gegenüberliegen.

4. Strukturbauteil (10', 10") nach Anspruch 1, **dadurch gekennzeichnet, dass**
• eine erste Umspritzung (U1) als Ring auf der Außenmantelfläche des Flanschkragens (10A-2) angespritzt ist, oder
• eine zweite Umspritzung (U2) als Ring auf der Außenmantelfläche des Flanschkragens (10A-2) mit einem radial abstehenden Bord (U2-B) angespritzt ist, der auf der rahmenabgewandten Seite der Flanschplatte (10A-1) angespritzt ist, oder
• eine dritte Umspritzung (U3) vollständig angespritzt ist, bei der die Flanschplatte (10A-1) des Flanschendes (10A) und der Flanschkragen (10A-2) mithin das Flanschende (10A) insgesamt vollständig umspritzt ist.

5. Strukturbauteil (10', 10") nach Anspruch 1, **dadurch gekennzeichnet, dass** mindestens einer der Thermoplastwerkstoffe oder beide Thermoplastwerkstoffe der Umspritzungen (U1, U2, U3) und des Druckbehälterkörpers (10-B) ein Faserthermoplastverbundmaterial ist.

6. Strukturbauteil (10', 10") nach Anspruch 1, **dadurch gekennzeichnet, dass** auf der Außenmantelfläche des mindestens einen Flanschkragens (10A-2) mindestens eine oberflächenvergrößernde Struktur (I, II, III) ausgebildet ist.

7. Verfahren zur Herstellung eines Strukturbauteils (10', 10") nach mindestens einem der Ansprüche 1 bis 6, **gekennzeichnet durch** die Schritte:
a) Vorfertigung mindestens eines Druckbehälterbodens (10A, 10A-1, 10A-2),
b) zumindest teilweise formschlüssige Umspritzung (U1, U2, U3) des mindestens einen Druckbehälterbodens (10A) mit einem Thermoplastwerkstoff,
c) Vorfertigung eines einseitig oder beidseitig offenen Druckbehälterkörpers (10B), der zumindest in dem mindestens einen Verbindungsbereich (V-AB) zu der Umspritzung (U1, U2, U3) aus einem Thermoplastwerkstoff besteht,
d) einseitige oder beidseitige form- und stoffschlüssige Verbindung der zumindest teilweise angeordneten Umspritzung (U1, U2, U3) des mindestens einen Druckbehälterbodens (10A, 10A-1, 10A-2) in dem mindestens einen Verbindungsbereich (V-AB) zu dem einseitig oder beidseitig offenen Druckbehälterkörper (10B), der zumindest in dem mindestens einen Verbindungsbereich (V-AB) aus einem Thermoplastwerkstoff besteht, wodurch der mindestens eine Druckbehälterboden (10A) und der Druckbehälterkörper (10B) miteinander einseitig oder beidseitig stoff- und formschlüssig sowie gasdicht zu einem Druckbehälter (10A, 10B) verbunden sind.

8. Verfahren nach Anspruch 7, **gekennzeichnet durch** den vor dem Schritt b) liegenden Schritt:
a1) Anordnung einer oberflächenvergrößernden Struktur (I, II, III) auf der Außenmantefläche des Flanschkragens (10A-2) des mindestens einen Druckbehälterbodens (10A).

9. Verfahren nach Anspruch 7 oder 8, **dadurch gekennzeichnet, dass** die form- und stoffschlüssige Verbindung durch Vibrations-, Rotations- oder Induktionsschweißen in dem mindestens einen Verbindungsbereich (V-AB) der Innenmantelfläche des zumindest im Verbindungsbereich (V-AB) aus einem Thermoplastwerkstoff bestehenden Druckbehälterkörpers (10B) und der kragenabgewandten Manteloberfläche der jeweiligen Umspritzung (U1, U2, U3) durchgeführt wird.

10. Verfahren nach Anspruch 7 oder 8, **dadurch gekennzeichnet, dass** die form- und stoffschlüssige Verbindung durch das Verschweißen mittels mindestens eines erhitzbaren Widerstandsdrahtes erfolgt, wobei der mindestens eine Widerstandsdraht in einem Fügebereich im Verbindungsbereich (V-AB) zwischen der Innenfläche des zumindest im Verbindungsbereich (V-AB) aus einem Thermoplastwerkstoff bestehenden Druckbehälterkörpers (10B) und der kragenabgewandten Manteloberfläche der jeweiligen Umspritzung (U1, U2, U3) angeordnet ist.

## Claims

1. Structural component (10', 10") for a chassis frame (100) of a vehicle (N), said structural component comprising, for fastening to the chassis frame (100), a flange-like end (10A, 10A-1) at least on one side or flange-like ends (10A, 10A-1) on both sides, said ends each having a flange collar (10A-2) on their side facing away from the frame, **characterized in that**
• the at least one flange collar (10A-2) has, at least on its outer lateral surface, a form-fitting layer-like encapsulation (U1, U2, U3) composed of a gas-tight thermoplastic material,
• wherein that lateral surface of the encapsulation (U1, U2, U3) which faces away from the collar forms a connecting region (V-AB) with a connecting surface to an inner lateral surface of a pressure vessel body (10B) which is open at least on one side or which is open on both sides,
• said pressure vessel body likewise being formed, at least in the at least one connecting region (V-AB) or completely, from a gas-tight thermoplastic material,
• such that, in the assembled state, in the at least one connecting region (V-AB), a form-fitting and materially bonded and gas-tight thermoplastic connection is formed between the at least one at least partially encapsulated flange collar (10A-2) and the pressure vessel body (10B),
• with the result that, in the assembled state, the flange-like end (10A, 10A-1) which is arranged at least on one side, and the associated flange collar (10A-2), forms at least one pressure vessel base (10A, 10A-1, 10A-2) on one side or on both sides of the pressure vessel body (10B) in the form of a pressure vessel (10A, 10B) overall.

2. Structural component (10', 10") according to Claim 1, **characterized in that** the at least one flange-like end (10A, 10A-1) is in the form of a flange plate (10A-1) which has the flange collar (10A-2) on its side facing away from the frame, wherein the flange plate (10A-1) and the associated flange collar (10A-2) are formed from a metallic lightweight material, in particular aluminium.

3. Structural component (10', 10") according to Claim 1 and 2, **characterized in that** the flange plate (10A-1), which is arranged at least on one side, of the flange end (10A) and the associated flange collar (10A-2), on its side facing away from the frame, are configured in a half-shell-like manner, and form the at least one half-shell-like pressure vessel base (10A, 10A-1, 10A-2), wherein, when the flange-like ends (10A, 10A-1) are arranged on both sides, two half-shell-like pressure vessel bases (10A, 10A-1, 10A-2) are situated opposite one another in the assembled state.

4. Structural component (10', 10") according to Claim 1, **characterized in that**
• a first encapsulation (U1) in the form of a ring is applied by injection molding on the outer lateral surface of the flange collar (10A-2), or
• a second encapsulation (U2) in the form of a ring is applied by injection molding on the outer lateral surface of the flange collar (10A-2) with a radially projecting rim (U2-B) which is applied by injection molding on that side of the flange plate (10A-1) which faces away from the frame, or
• a third encapsulation (U3) is completely applied by injection molding, in the case of which the flange plate (10A-1) of the flange end (10A) and the flange collar (10A-2), thus the flange end (10A), overall is completely encapsulated.

5. Structural component (10', 10") according to Claim 1, **characterized in that** at least one of the thermoplastic materials or both thermoplastic materials of the encapsulations (U1, U2, U3) and of the pressure vessel body (10-B) is/are a fibrous thermoplastic composite material.

6. Structural component (10', 10") according to Claim 1, **characterized in that** at least one surface-enlarging structure (I, II, III) is formed on the outer lateral surface of the at least one flange collar (10A-2).

7. Method for producing a structural component (10', 10") according to at least one of Claims 1 to 6, **characterized by** the steps:
a) prefabricating at least one pressure vessel base (10A, 10A-1, 10A-2),
b) at least partially encapsulating (U1, U2, U3) the at least one pressure vessel base (10A) with a thermoplastic material in a form-fitting manner,
c) prefabricating a pressure vessel body (10B) which is open on one side or on both sides and which is composed, at least in the at least one connecting region (V-AB) to the encapsulation (U1, U2, U3), of a thermoplastic material,
d) connecting, on one side or on both sides, the at least partially arranged encapsulation (U1, U2, U3) of the at least one pressure vessel base (10A, 10A-1, 10A-2) in a form-fitting and materially bonded manner in the at least one connecting region (V-AB) to the pressure vessel body (10B) which is open on one side or on both sides and which is composed, at least in the at least one connecting region (V-AB), of a thermoplastic material, as a result of which the at least one pressure vessel base (10A) and the pressure vessel body (10B) are connected to one another on one side or on both sides in a materially bonded and form-fitting and gas-tight manner to form a pressure vessel (10A, 10B).

8. Method according to Claim 7, **characterized by** the step preceding step b):
a1) arranging a surface-enlarging structure (I, II, III) on the outer lateral surface of the flange collar (10A-2) of the at least one pressure vessel base (10A).

9. Method according to Claim 7 or 8, **characterized in that** the form-fitting and materially bonded connection is carried out by vibration welding, rotary welding or induction welding in the at least one connecting region (V-AB) of the inner lateral surface of the pressure vessel body (10B) which is composed, at least in the connecting region (V-AB), of a thermoplastic material, and of that lateral surface of the respective encapsulation (U1, U2, U3) which faces away from the collar.

10. Method according to Claim 7 or 8, **characterized in that** the form-fitting and materially bonded connection is effected by welding using at least one heatable resistance wire, wherein the at least one resistance wire is arranged in a joining region in the connecting region (V-AB) between the inner surface of the pressure vessel body (10B) which is composed, at least in the connecting region (V-AB), of a thermoplastic material and that lateral surface of the respective encapsulation (U1, U2, U3) which faces away from the collar.

## Revendications

1. Composant structurel (10', 10") pour un cadre de châssis (100) d'un véhicule (N), qui comprend, pour la fixation au cadre de châssis (100), au moins une extrémité en forme de bride (10A, 10A-1) d'un côté ou des extrémités en forme de bride (10A, 10A-1) des deux côtés, qui présentent chacune un collet de bride (10A-2) sur leur côté détourné du cadre, **caractérisé en ce que**
- l'au moins un collet de bride (10A-2) présente, au moins sur sa surface d'enveloppe extérieure, un surmoulage en forme de couche par accouplement de forme (U1, U2, U3) en un matériau thermoplastique étanche aux gaz,
- la surface d'enveloppe du surmoulage (U1, U2, U3) détournée du collet formant une zone de liaison (V-AB) avec une surface de liaison à une surface d'enveloppe intérieure d'un corps de contenant sous pression (10B) ouvert au moins d'un côté ou ouvert des deux côtés,
- qui est également réalisé, au moins dans l'au moins une zone de liaison (V-AB) ou entièrement, en un matériau thermoplastique étanche aux gaz,
- de telle sorte que dans l'au moins une zone de liaison (V-AB), entre l'au moins un collet de bride (10A-2) au moins partiellement surmoulé et le corps de contenant sous pression (10B), une liaison thermoplastique par accouplement de forme et de matière ainsi qu'étanche aux gaz est réalisée à l'état assemblé,
- de telle sorte qu'à l'état assemblé, l'extrémité en forme de bride (10A, 10A-1) agencée au moins d'un côté et le collet de bride associé (10A-2) forment dans leur ensemble au moins un fond de contenant sous pression (10A, 10A-1, 10A-2) d'un côté ou des deux côtés du corps de contenant sous pression (10B) en tant que contenant sous pression (10A, 10B).

2. Composant structurel (10', 10") selon la revendication 1, **caractérisé en ce que** l'au moins une extrémité en forme de bride (10A, 10A-1) est réalisée sous forme de plaque de bride (10A-1) qui présente le collet de bride (10A-2) sur son côté détourné du cadre, la plaque de bride (10A-1) et le collet de bride associé (10A-2) étant réalisés en un matériau de construction métallique léger, notamment en aluminium.

3. Composant structurel (10', 10") selon la revendication 1 et 2, **caractérisé en ce que** la plaque de bride (10A-1) de l'extrémité de bride (10A), agencée au moins d'un côté, et le collet de bride associé (10A-2) sur son côté détourné du cadre sont réalisés en forme de demi-coque, et forment l'au moins un fond de contenant sous pression en forme de demi-coque (10A, 10A-1, 10A-2), deux fonds de contenant sous pression en forme de demi-coque (10A, 10A-1, 10A-2) étant en vis-à-vis lors d'un agencement des deux côtés des extrémités en forme de bride (10A, 10A-1) à l'état assemblé.

4. Composant structurel (10', 10") selon la revendication 1, **caractérisé en ce que**
- un premier surmoulage (U1) est injecté sous forme d'anneau sur la surface d'enveloppe extérieure du collet de bride (10A-2), ou
- un deuxième surmoulage (U2) est injecté sous forme d'anneau sur la surface d'enveloppe extérieure du collet de bride (10A-2) avec un bord (U2-B) faisant saillie radialement, qui est injecté sur le côté de la plaque de bride (10A-1) détourné du cadre, ou
- un troisième surmoulage (U3) est entièrement injecté, selon lequel la plaque de bride (10A-1) de l'extrémité de bride (10A) et le collet de bride (10A-2), donc l'extrémité de bride (10A), sont entièrement surmoulés dans leur ensemble.

5. Composant structurel (10', 10") selon la revendication 1, **caractérisé en ce qu'**au moins l'un des matériaux thermoplastiques ou les deux matériaux thermoplastiques des surmoulages (U1, U2, U3) et du corps de contenant sous pression (10-B) est un matériau composite thermoplastique de fibres.

6. Composant structurel (10', 10") selon la revendication 1, **caractérisé en ce qu'**au moins une structure d'agrandissement de surface (I, II, III) est réalisée sur la surface d'enveloppe extérieure de l'au moins un collet de bride (10A-2).

7. Procédé de fabrication d'un composant structurel (10', 10") selon au moins l'une quelconque des revendications 1 à 6, **caractérisé par** les étapes suivantes :
a) la préfabrication d'au moins un fond de contenant sous pression (10A, 10A-1, 10A-2),
b) le surmoulage au moins partiellement par accouplement de forme (U1, U2, U3) de l'au moins un fond de contenant sous pression (10A) avec un matériau thermoplastique,
c) la préfabrication d'un corps de contenant sous pression (10B) ouvert d'un côté ou des deux côtés, qui est constitué d'un matériau thermoplastique au moins dans l'au moins une zone de liaison (V-AB) avec le surmoulage (U1, U2, U3),
d) la liaison d'un côté ou des deux côtés par accouplement de forme et de matière du surmoulage au moins partiellement agencé (U1, U2, U3) de l'au moins un fond de contenant sous pression (10A, 10A-1, 10A-2) dans l'au moins une zone de liaison (V-AB) au corps de contenant sous pression (10B) ouvert d'un côté ou des deux côtés, qui est constitué d'un matériau thermoplastique au moins dans l'au moins une zone de liaison (V-AB), moyennant quoi l'au moins un fond de contenant sous pression (10A) et le corps de contenant sous pression (10B) sont reliés l'un à l'autre d'un côté ou des deux côtés par accouplement de matière et de forme ainsi que de manière étanche aux gaz pour former un contenant sous pression (10A, 10B).

8. Procédé selon la revendication 7, **caractérisé par** l'étape qui précède l'étape b) :
a1) l'agencement d'une structure d'agrandissement de surface (I, II, III) sur la surface d'enveloppe extérieure du collet de bride (10A-2) de l'au moins un fond de contenant sous pression (10A).

9. Procédé selon la revendication 7 ou 8, **caractérisé en ce que** la liaison par accouplement de forme et de matière est réalisée par soudage par vibration, rotation ou induction dans l'au moins une zone de liaison (V-AB) de la surface d'enveloppe intérieure du corps de contenant sous pression (10B) constitué d'un matériau thermoplastique au moins dans la zone de liaison (V-AB) et de la surface d'enveloppe détournée du collet du surmoulage respectif (U1, U2, U3).

10. Procédé selon la revendication 7 ou 8, **caractérisé en ce que** la liaison par accouplement de forme et de matière est effectuée par le soudage au moyen d'au moins un fil de résistance pouvant être chauffé, l'au moins un fil de résistance étant agencé dans une zone de jonction dans la zone de liaison (V-AB) entre la surface intérieure du corps de contenant sous pression (10B) constitué d'un matériau thermoplastique au moins dans la zone de liaison (V-AB) et la surface d'enveloppe détournée du collet du surmoulage respectif (U1, U2, U3).
